# EUROPEAN PATENT SPECIFICATION

(11) **EP 1 952 970 B1**
(45) Date of publication and mention of the grant of the patent: **28.04.2010**
(21) Application number: 07250413.7
(22) Date of filing: 31.01.2007
(51) Int. Cl.: B29C 49/00, B32B 1/08, B32B 27/32, C08F 10/06, C08L 23/12

(54) **Use of polypropyplene having long chain branching to broaden the processing window in the injection strech blow molding**
Einsatz eines langkettenverzweigten Polypropylens zur Verbreiterung des Verarbeitungsfensters beim Spritzstreckblasformen
Utilisation d'un propylène ayant des ramifications à longues chaînes pour l'élargissement de la fenêtre du procédé de moulage par injection-étirage-soufflage

(43) Date of publication of application: 06.08.2008
(73) Proprietor: Borealis Technology Oy, 06101 Porvoo (FI)
(72) Inventor: Oysaed, Harry, 3960 Stathelle (NO); Johansen, Geir Morten, 3943 Porsgrunn (NO); Pham, Tung, 4040 Linz (AT)
(74) Representative: Campbell, Neil Boyd

(56) References cited:
- EP-A- 1 170 307
- EP-A- 1 683 631
- EP-A1- 0 987 279
- EP-A2- 0 190 889
- DE-A1-102004 040 991
- US-A- 6 143 825
- US-A- 6 166 144

## Description

This invention relates to the use of a particular long chain branched (LCB) polypropylene polymer to broaden the processing window of propylene polymers in an injection stretch blow moulding (ISBM) process. The invention also covers particular compositions comprising the LCB polypropylene polymer and propylene polymer as well as articles made therefrom and an injection stretch blow moulding process using the LCB polypropylene polymer.

The ISBM process is well known in the art and involves producing a preform by injection moulding followed by stretching and blowing the preform in order to induce biaxial orientation in the solid phase. Two types of ISBM process are practised. In the single-stage process a preform is injection moulded, stretched and blown before it is allowed to cool. In the two-stage process, the injection moulded preform is allowed to cool before it is reheated, stretched and blown into a container.

ISBM processes are used to make containers such as bottles and jars having very good optical properties. Poly(ethylene terephthalate) (PET) is the most commonly used polymer for ISBM applications because PET has good processing behaviour and produces high quality bottles having good optical and barrier properties.

PET is however a relatively expensive polymer and cannot function at higher temperatures due to poor heat resistance. The skilled man is thus looking for alternatives to PET for ISBM applications.

Polypropylene is cheaper than PET and demonstrates better heat resistance than PET. In some applications, particularly when high temperature resistance is required, it would therefore be advantageous to use polypropylene instead of PET in ISBM processes. However, polypropylene has a narrow processing window when used in ISBM processes, i.e. polypropylene can be stretched and blown only over a narrow temperature range. Thus, in an industrial process, polypropylene typically possess a 4 °C processing window, often even narrower, whereas PET can be processed over a 15°C temperature range. A narrow processing window is not favourable industrially since temperature control during ISBM becomes a major issue leading to a potentially high scrap rate.

There are thus many problems associated with the use of polypropylenes as an alternative to PET for ISBM.

The present inventors have therefore been addressing the problem of broadening the processing window of polypropylene whilst trying to maintain satisfactory optical and mechanical properties required of ISBM containers.

Few solutions to this problem are offered in the prior art. EP-A-0190889 describes long chain branched polypropylene for use in a variety of applications. EP 1683631 describes multilayer structures in which a layer contains both an ethylene polymer and a long chain branched polyethylene.

EP-0987278 describes long chain branched polymers as miscibility improvers for propylene homopolymers and propylene based copolymers.

US 6143825 describes the combination of a propylene polymer, high melt strength propylene and modified propylene graft polymer as an adhesive.

One way forward is however to use propylene polymers of multimodal molecular weight distribution as such polymers have a broader molecular weight distribution which provides a broader processing window. Further alternative ways of solving this problem are however required.

The present inventors have surprisingly found that the processing window for an ISBM process can be broadened by mixing the propylene polymer with a polypropylene polymer containing long chain branching.

Thus, viewed from one aspect, the invention provides an ISBM article formed from a random propylene copolymer and a polypropylene having long chain branching, preferably comprising
(I) 71 to 99.5 wt% of a random copolymer of propylene; and
(II) 0.5 to 14 wt% of a polypropylene having long chain branching.

Viewed from another aspect the invention provides a process for the formation of an article comprising:
(I) mixing at least one polypropylene having long chain branching with a random propylene copolymer;
(II) extruding the resulting mixture and injecting the extrudate into a mould to form a preform:
(III) allowing the preform to cool;
(IV) reheating the preform to a temperature in the range 90 to 160°C; and
(V) stretching and blowing the preform to form an article.

Viewed from another aspect the invention provides a process for the formation of an article comprising:
(I) mixing at least one polypropylene having long chain branching with a random propylene copolymer;
(II) extruding the resulting mixture and injecting the extrudate into a mould to form a preform: and
(III) stretching and blowing the preform to form an article without allowing the preform to cool.

### Polypropylene with long chain branching

In order to broaden the processing window in the ISBM process, a polypropylene which contains long chain branching is required. Such polypropylene materials are known in the art, are well characterised and are available from suppliers such as Borealis and Basell.

Polypropylene polymers which contain long chain branching (LCB) are readily distinguished from propylene polymers which contain only short chain branching (or those free of branching) by those skilled in the art.

The amount of branching is determined using the weight average branching index g' of the branched propylene polymer. The weight average branching index g' is defined as g' = [IV]_{br}/[IV]ₗᵢₙ|_{Mw} in which g' is the weight average branching index, [IV]_{br} is the intrinsic viscosity of the branched polypropylene and [IV]ₗᵢₙ is the intrinsic viscosity of the linear polypropylene having substantially the same weight average molecular weight as the branched polypropylene. It is well known in the art that as the g' value decreases, branching increases (see B.H. Zimm and W.H. Stockmayer, J. Chem. Phys. 17, 1301 (1949)).

Polypropylenes with a g' ≤ 0.90 are regarded as having long chain branching according to the invention. Preferred polypropylenes with LCB according to the invention have a g' value of about 0.2-0.4.

The polypropylene with long chain branching also exhibits strain hardening behaviour.

Polypropylenes having long chain branches may be produced starting with linear propylene polymers, the base polypropylene. The base polypropylene may be a homopolymer of propylene, a random copolymer or block copolymer of propylene with one or more olefins and/or dienes selected from ethylene and C₄₋₁₈ alpha-olefins or dienes. The polypropylene can be prepared with any catalyst system known in the field of propylene polymerisation, preferably a Ziegler-Natta or metallocene catalyst system.

Preferably the base polypropylene is a homopolymer, especially a propylene homopolymer with a weight average molecular weight M_{w} of 500,000 to 1,500,000 g/mol, or a random copolymer of propylene with ethylene. The base polypropylene may of course also be formed from a mixture of homopolymers, a mixture of copolymers or a mixture of homopolymers and copolymers.

Where the base polypropylene is a copolymer, the amount of comonomer in the polypropylene may range from 1 to 5 wt%, preferably 2 to 4 wt%.

The preferred catalyst system used to form the base polymer comprises a Ziegler-Natta catalyst having a solid catalyst component, a cocatalyst component and an external donor. The chain transfer sensitivity of such a Ziegler-Natta catalyst can be reduced by using an external donor which is strongly coordinating. The use of such a catalyst system to make polypropylene is well known.

Prior to formation of the long chain branched polypropylene, the linear base polypropylene may have the shape of powders or granules with grain sizes ranging from 0.001 mm up to 7 mm.

Polypropylenes with long chain branching can be produced by a variety of processes, e.g. by treatment of the base propylene polymer with thermally decomposing radical-forming agents and/or by treatment with ionizing radiation, where both treatments may optionally be accompanied or followed by treatment with bi- or multifunctionally unsaturated monomers, e.g. butadiene, isoprene, dimethylbutadiene or divinylbenzene. Further processes may be suitable for the production of the long chain branched polypropylene polymer, provided that the resulting modified propylene polymer has the necessary branching properties and strain hardening behaviour.

Preferably, the polypropylene with long chain branches is produced by mixing the linear propylene polymer with an effective amount of at least one free radical generator. Suitable free radical generators include peroxides, peresters or and/or peroxycarbonates. These can be provided in inert solvent if required and are capable of thermal decomposition. Typically, the mixture of base polypropylene polymer and free radical generator is heated to 30-100°C, preferably to 60-90°C to induce radical formation.

Preferably, the amount of free radical generator is 0.05 to 3 wt%, based on the weight of the base polypropylene polymer(s).

Preferred free radical generators are organic peroxides. Preferred peroxides are acyl peroxides, alkyl peroxides or hydroperoxides. Examples of suitable organic peroxides are acyl peroxides, such as benzoyl peroxide, 4-chlorobenzoyl peroxide, 3-methoxybenzoyl peroxide and/or methylbenzoyl peroxide; alkyl peroxides such as allyl tertbutyl peroxide, 2,2-bis(tert-butylperoxybutane), 1,1-bis(tertbutylperoxy)-3,3,5-trimethylcyclohexane, n-butyl-4,4-bis(tert-butylperoxy)valerate, diisopropylaminomethyl tert-amyl peroxide, dimethylaminomethyl tert-amyl peroxide, diethylaminomethyl tert-butyl peroxide, dimethylaminomethyl tert-butyl peroxide, 1,1-di(tert-amylperoxy)cyclohexane, tert-amyl peroxide, tert-butyl cumyl peroxide, tert-butyl peroxide, and/or 1-hydroxybutyl n-butyl peroxide. Alternative free radical generators include peresters and peroxycarbonates, such as butyl peracetate, cumyl peracetate, cumyl perpropionate, cyclohexyl peracetate, di tert-butyl peradipate, di tert-butyl perazelate, di tert-butyl perglutarate, di tert-butyl perphthalate, di tert-butyl persebacate, 4-nitrocumyl perpropionate, 1-phenylethyl perbenzoate, phenylethyl nitroperbenzoate, tert-butyl bicyclo[2.2.1]heptanepercarboxylate, tert-butyl 4-carbomethoxyperbutyrate, tert-butyl cyclobutanepercarboxylate, tert-butyl cyclohexylperoxycarboxylate, tert-butyl cyclopentylpercarboxylate, tert-butyl cyclopropanepercarboxylate, tert-butyl dimethylpercinnamate, tert-butyl 2 (2,2 diphenylvinyl)perbenzoate, tert-butyl 4-methoxyperbenzoate, tert-butyl perbenzoate, tert-butyl carboxycyclohexane, tert-butyl pernaphthoate, tert-butylperoxy isopropyl carbonate, tert-butyl pertoluate, tert-butyl-1-phenylcyclopropylpercarboxylate, tert-butyl-2-propylperpenten-2-oate, tert-butyl-1-methylcyclopropylpercarboxylate, tert-butyl-4-nitrophenylperacetate, tert-butyl nitrophenylperoxycarbamate, tert-butyl N-succinimidopercarboxylate, tert-butyl percrotonate, tert-butylpermaleic acid, tert-butyl permethacrylate, tert-butyl peroctoate, tert-butylperoxy isopropyl carbonate, tert-butyl perisobutyrate, tert-butyl peracrylate and/or tert-butyl perpropionate. Mixtures of any of the above may also be used.

The base propylene polymer is also preferably contacted with at least one multifunctional monomer prior to thermal decomposition of the free radical generator. Multifunctional monomers are absorbed by the base propylene polymer preferably at temperatures of from 20-120°C, preferably from 70-90°C. The monomer is preferably gaseous during the absorption step. Preferably, the amount of multifunctional monomer is from 0.01 to 10 wt%, more preferably from 0.05 to 2 wt%, based on the weight of the base propylene polymer.

The average sorption time of the multifunctional monomer on the base propylene polymer is advantageously from 10 to 1000 seconds, preferably from 20 to 800 seconds, particularly preferably from 60 to 600 seconds. The absorption of the multifunctional monomer is preferably performed in continuous through-flow mixers.

By multifunctional monomer means a monomer containing two or more sites for polymerization, e.g. two double bonds. The multifunctional monomer is preferably bifunctional. Multifunctional monomers, which may be used in the process for producing the modified propylene polymers preferably are allyl compounds, C₄ to C₁₀ dienes and/or C₇ to C₁₀ divinyl compounds. Preferred multifunctional monomers which are preferably used for the preparation of the polypropylene with long chain branches include: divinyl compounds, such as divinylaniline, divinylbenzene, p-divinylbenzene, divinylpentane and/or divinylpropane; allyl compounds, such as allyl acrylate, allyl methacrylate, allyl methyl maleate and/or allyl vinyl ether; dienes, such as butadiene, chloroprene, cyclohexadiene, cyclopentadiene, 2,3 dimethylbutadiene, heptadiene, hexadiene, isoprene and/or 1,4 pentadiene; and mixture of these monomers.

Especially preferred, the multifunctional monomer is butadiene, isoprene, dimethyl-butadiene or divinylbenzene. It will also be possible to use a mixture of monomers.

The mixture containing the base polymer, free radical generator and the multifunctional monomer is transferred to a continuous kneeder or extruder (preferably a twin screw extruder), heated, melted and devolatilised. The melting temperature in this step is preferably between 210°C and 250°C.

The molten polypropylene with long chain branches is then cooled and pelletised.

Usual amounts of standard polymer additives can be employed at any convenient stage of the process. For example, 0.01 to 2.5% by weight of stabilizers, 0.01 to 1% by weight of processing aids, 0.1 to 1% by weight of antistats, 0.2 to 3% by weight of pigments and up to 3% by weight of α-nucleating agents, in each case based on the weight of the propylene polymer, may be added before formation of the long chain branching polymer or during any subsequent step of its formation. They may also be added once the LCB polypropylene has been formed.

The process for producing the LCB polypropylene is preferably continuous, performed in a continuous reactor, mixer, kneader and extruder. Batchwise production of the LCB polypropylene, however is feasible as well.

The formation of polypropylenes having long chain branching is known in the art and will therefore be readily achieved by the skilled man.

As a result of the process for producing the polypropylene having g' ≤ 0.90, the MFR, compared to the starting material, is increased. The polypropylene with long chain branching should preferably have an MFR₂ in the range 0.1 to 20 g/10min, preferably 0.5 to 10 g/10min, such as 1 to 5 g/10 min, when measured according to ISO 1133 at 230 °C and a load of 2.16 kg.

The flexural modulus of the polypropylene with long chain branching may be greater than 800 MPa, preferably greater than 820 MPa (ISO 178).

The tensile strength at yield of the polypropylene with long chain branching may be at least 20 MPa, preferably at least 25 MPa.

The tensile modulus of the polypropylene with long chain branching may be at least 800 MPa, preferably at least 850 MPa.

The charpy impact strength (notched, 23°C), may be at least 5 kJ/m2, preferably at least 7° kJ/m2.

It is preferred if the long chain branched polypropylenes of the invention show strain hardening behaviour. Long chain branched polypropylenes which have strain hardening behaviour have enhanced strength with haul-off forces F > 15 cN and enhanced drawability with draw-down velocities v > 150 mm/s.

### Propylene Polymer

The polypropylene having long chain branching is combined with a random propylene polymer in order to broaden the processing window of the latter in Injection Stretch Blow moulding of that propylene polymer.

The amount of long chain branched polypropylene used in the invention may range from 0.5 to 30 wt%, preferably 1 to 20 wt%, more preferably 2 to 15 wt%, espeically 3 to 10 wt% relative to the weight of the propylene polymer.

By propylene polymer is meant a polymer in which at least 70%, preferably at least 80% by weight of the polymer comprises propylene monomer units. The term copolymer is used herein to cover the combination of propylene with at least one other comonomer, preferably with one comonomer only.

Preferably, the propylene polymer is a copolymer with at least one C₂₋₁₀-alpha-olefin comonomer such as ethylene, butene or hexene, especially ethylene. The amount of comonomer present may vary, however suitable ranges are from 1% to 30%, preferably 2 to 8% by weight, such as between 1 to 4 wt%, especially between 2 and 3.5 wt% (relative to propylene).

The propylene polymer, whatever its nature, may have a density in the range 890-925 kg/m³ (ISO 1183), e.g. 900-920 kg/m³. It may have an MFR₂ in the range 0.05 to 50 g/10min, preferably 1 to 40 g/10min, such as 2 to 30 g/10 min, preferably 3 to 35 g/10min when measured according to ISO 1133 at 230 °C and a load of 2.16 kg. In some embodiments, the MFR₂ is 6 to 30 g/10 min, most preferably 8 to 30 g/10 min, e.g. about 20 g/10min.

The propylene polymer of use in this invention may be unimodal or multimodal. In a unimodal polypropylene its molecular weight profile comprises a single peak By multimodal, preferably bimodal, is meant that its molecular weight profile does not comprise a single peak but instead comprises the combination of two or more peaks (which may or may not be distinguishable) centred about different average molecular weights as a result of the fact that the polymer comprises two or more separately produced components, e.g. blended components or more preferably components prepared in situ. As noted above, it is believed that the use of multimodal polymers contributes to broadening the processing window of propylene polymers in ISBM processes. The inventors have shown that still further broadening can be achieved if a reheating agent is used in conjunction with a multimodal polypropylene polymer. However, whilst the invention is suitable for use with multimodal polymers, its benefits might be most striking with unimodal polymers where there is no multimodality to additional contribute to a broadened processing window.

Multimodal propylene polymers will have at least two components. These can be prepared separately and blended or prepared together, preferably in a multistage polymerisation.

Multimodal propylene polymers of use in this invention may therefore have a composition comprising:
(A) a polypropylene homopolymer or a propylene random copolymer comprising propylene and up to 10 weight % of comonomer selected from ethylene and/or C₄₋₁₀ alpha olefin; and
(B) a random copolymer of propylene and comonomer selected from ethylene and/or C₄₋₁₀ alpha olefin.

Components A and B must be different.

The composition may contain further components if desired however, the multimodal polymer described herein preferably comprises only two polymer components, A and B.

The multimodal polymer composition may comprise 10 to 90 wt % of polymer A, preferably 30 to 70 wt %, more preferably 40 to 60 wt % and most preferably 45 to 55 wt %. Conversely therefore, the composition preferably comprises 10 to 90 wt % of polymer B, preferably 30 to 70 wt %, more preferably 40 to 60 wt % and most preferably 45 to 55 wt %.

Polymer A preferably comprises up to 3.5 wt % comonomer, more preferably up to 2.5 wt % comonomer. Where polymer A is copolymeric, the comonomer is preferably ethylene. The comonomer in polymer (B) is preferably ethylene.

Such multimodal polymers may be prepared by simple blending, by two or more stage polymerisation or by the use of two or more different polymerisation catalysts in a one stage polymerisation. Preferably however they are produced in a two-stage polymerisation using the same catalyst, e.g. a metallocene catalyst or preferably a Ziegler-Natta catalyst, in particular a slurry polymerisation in a loop reactor followed by a gas phase polymerisation in a gas phase reactor.
Conventional cocatalysts, supports/carriers, electron donors etc. can be used.

A loop reactor - gas phase reactor system is marketed by Borealis A/S, Denmark as a BORSTAR reactor system. The polymer of the invention is thus preferably formed in a two stage process comprising a first slurry loop polymerisation followed by gas phase polymerisation in the presence of a Ziegler-Natta catalyst.

The conditions used in such a process are well known. For slurry reactors, the reaction temperature will generally be in the range 60 to 110°C (e.g. 85-110°C), the reactor pressure will generally be in the range 5 to 80 bar (e.g. 50-65 bar), and the residence time will generally be in the range 0.3 to 5 hours (e.g. 0.5 to 2 hours). The diluent used will generally be an aliphatic hydrocarbon having a boiling point in the range -70 to +100°C. In such reactors, polymerisation may if desired be effected under supercritical conditions.

For gas phase reactors, the reaction temperature used will generally be in the range 60 to 115°C (e.g. 70 to 110°C), the reactor pressure will generally be in the range 10 to 25 bar, and the residence time will generally be 1 to 8 hours. The gas used will commonly be a non-reactive gas such as nitrogen or low boiling point hydrocarbons such as propane together with the monomer (i.e. propylene and ethylene when required).

Preferably, component A of the polymer of the invention is produced in a continuously operating loop reactor where propylene (and comonomer when required) are polymerised in the presence of a polymerisation catalyst as stated above and a chain transfer agent such as hydrogen. The diluent is typically an inert aliphatic hydrocarbon, preferably isobutane or propane.

Component B can then be formed in a gas phase reactor using the same catalyst. Prepolymerisation can be employed as is well known in the art. Ziegler-Natta catalysts are preferred. The nature of the Ziegler-Natta catalyst is described in numerous prior publications, e.g. US 5234879.

Alternatively, the polymers of the invention can be made by blending two random copolymers of propylene or by blending one random copolymer with a polypropylene homopolymer in a conventional blending apparatus.

Unimodal polymers can be made using a one stage process e.g. using the parameters above for slurry and gas phase processes. Catalysts employable are the same as those utilised to manufacture multimodal polymers.

Heterophasic and random copolymers of propylene and propylene homopolymers of use in this invention are commercially available from various suppliers, e.g. Borealis A/S.

### Composition

The ISBM article of the invention is preferably formed from a composition comprising
(I) 71 to 99.5 wt% of a random copolymer of polypropylene; and
(II) 0.5 to 14 wt% of a polypropylene having long chain branching.

The nature of the polypropylene having long chain branching is described fully above and this applies to this embodiment of the invention too. Features of the propylene polymer described above also apply to the polypropylene of this embodiment.

However, highly preferred features of the composition of the invention include that the amount of long chain branched polypropylene used may range from 1 to 10 wt%, preferably, 2 to 8 wt%, especially 3 to 7 wt%, most especially around 5 wt%.

The random copolymer of polypropylene is preferably unimodal. The amount of comonomer present may range from 0.5% to 10%, preferably 1 to 5% by weight, such as between 1 to 4 wt%, especially between 2 and 3.5 wt% (relative to propylene).

It may have an MFR₂ in the range 5 to 40 g/10min, preferably 10 to 30 g/10min, such as 15 to 25 g/10 min.

The copolymer used in the polypropylene is preferably ethylene alone.

With regard to the polypropylene having long chain branching, this too is preferably based on a propylene random copolymer, especially with ethylene. The amount of comonomer present may range from 0.5% to 10%, preferably 1 to 5% by weight, such as between 1 to 4 wt%, especially between 2 and 3.5 wt% (relative to propylene). It may have an MFR₂ in the range 0.1 to 10 g/10min, preferably 1 to 10 g/10min, such as 2 to 5 g/10 min.

In addition, the polymers can be mixed with minor amounts of standard polymer additives such as polymer processing agent, nucleating agents, anti-oxidants, reheat agents, UV stabilisers, clarifying agents etc.

### Applications and Article Manufacture

The use of the polypropylene with long chain branching broadens the processing window for an ISBM process using that polymer. By broadening the processing window is meant therefore that the temperature range at which propylene polymer compositions comprising the polypropylene with long chain branching can be successfully stretched and blow moulded in the ISBM process is broader than for an otherwise identical polymer without the polypropylene with long chain branching.

This processing window is measured by stretch blow moulding of 300 ml polypropylene bottles on a one-cavity SIG Corpoplast LB01HR machine from 2.8 mm thick, 14 g pre-forms. This machine is equipped with two heater boxes, each having 5 IR lamps (L1-L5), but only one box was used in the determination of processing windows. L1 and L2 were 2500 watt lamps and L3, L4 and L5 were 2000 watt. The setting ratio of the lamps in the heater box was L1/L2/L3/L4/L5 46/57/85/85/54. All preforms are heated for the same period of time. Preforms were heated in two periods, HT1 and HT2. Between HT1 and HT2 is a conditioning time, CT1. After HT2 and before stretching is a conditioning time, CT2. HT1, HT2, CT1 and CT2 were 15 seconds, 4.6 seconds, 13 seconds and 10 seconds respectively. During heating of the preforms, surface cooling is provided to prevent surface melting. Cooling is carried out at 80% of the fan capacity. The preform is rotated on a mandrel throughout heating and conditioning at a speed of 100 rpm. After CT2, all bottles are blown under the same conditions. The preform is brought into the bottle mould and first stretched at a speed of 1000 mm/s. A pressure of 6 bar for 1.2 seconds was then used to blow up the bottle.

For each sample, the total heating energy was changed in steps and the resulting preform temperatures recorded to find the upper preform temperature and lower preform temperature at which bottles without visible failures can be blown. This range is defined as the processing window of biaxial stretching of bottles.

Visible failures will be readily determined by those skilled in the art. For example, temperatures that are too low for stretching causes the stretch rod to puncture the preform. Temperatures that are too high for stretching cause the polymer to melt and lead to variations in the thickness of the blown articles.

The equipment needed to determine the processing window is described in detail in the examples but will be known to the skilled man.

The processing window should be at least 4°C, e.g. at least 5°C, preferably at least 6°C, more preferably at least 7°C. The processing window should be broadened by at least 1°C, preferably at least 2°C, e.g. at least 3°C, especially at least 5°C.

It will be appreciated that the processing window, as defined herein is measured on 2.8 mm, 14 g preforms. Variation in the weight of the preform affects the breadth of the processing window. Thinner preforms or lighter preforms tend to have broader processing windows than heavier preforms.

Thus, it is preferred if, irrespective of the weight of the preform, the processing window is broadened by at least 20%, e.g. at least 30%, preferably at least 40%, especially at least 50%, most especially at least 100%.

The propylene polymer with added polypropylene with long chain branching is used for the manufacture of injection stretch blow moulded articles. Injection stretch blow moulding is a known process which involves certain steps. First, a preform is injection moulded from a polypropylene composition containing the propylene polymer and the polypropylene with long chain branching. The polypropylene composition is heated to melt the composition to form a flowable polymer melt that is introduced by injection into the mould. The injection mould has a cavity and a mating ram to form the preform into the desired shape, e.g. one having threaded neck portion and a bottle body portion. The preform can then be removed from the mould, cooled and stored until it is ready to be formed into an article or the preform can be stretched and blown straight away.

When the preform reaches the desired temperature, the optionally reheated preform is then ready for stretch blow moulding. The preform is placed within a suitably shaped mould and a gas, such as air or nitrogen, is injected into the internal volume of the preform through a nozzle as a push rod forces the polypropylene composition to expand outwardly to fill the mould. This is the stretching and blowing stage of the process where the processing window of the material is narrow for polymer compositions without the polypropylene with long chain branching.

During this step the material becomes biaxially oriented which improves the physical and optical properties of the article, as well as improving the barrier properties.

The stretching temperatures used are normally between 90°C and 160 °C, e.g. 130°C. Stretching speeds may range from 20 to 60 m/min in both TD and MD.

Control of the temperature of the polymer during the biaxial stretching step is critical. If the temperature is too high the stretched polymer will include areas of melted polymer, which reduces the molecular orientation, and will show variation in sample thickness. If the temperature is too low it will not be possible to biaxially stretch the polymer without the polymer failing. By broadening the processing window for any given polymer composition, the temperature range over which the polymer can in practice be biaxially stretched is widened.

It is important that the different polymer components be intimately mixed prior to extrusion and ISBM as otherwise there is a risk of in homogeneities. Thus, it is especially preferred to thoroughly blend the components, for example using a twin screw extruder, preferably a counter-rotating extruder prior to extrusion.

The present invention provides a method of making polypropylene containers, such as bottles, and other polypropylene articles by the ISBM process. Preferred articles are bottles, e.g. of 100 ml to 10 L in volume, e.g. 300 ml or 500 ml. The combination of the polypropylene with long chain branching and propylene polymer can form one layer in a monolayer or multilayered article.

These articles may incorporate barrier layers as is known in the art. For certain applications for example, it may be necessary to incorporate a barrier layer, i.e. a layer which is impermeable to water and oxygen into the structure. This can be achieved using conventional lamination techniques. Suitable barrier layers are known and include polyamide, ethylene vinyl alcohol and metallised Al layers. The formation is multilayered articles using an ISBM process is known in the art.

Preferably however, the adhesive used to bind the barrier layer to the propylene layer containing the material of the invention is added to the propylene layer. Suitable adhesives include anhydride modified polymers.

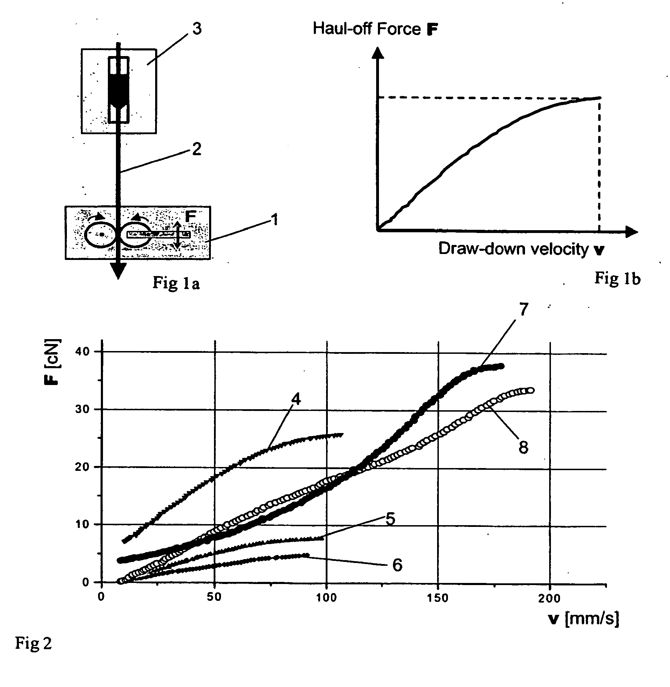

The invention will now be described further with reference to the following non-limiting examples and figures. Figures 1 and 2 show strain hardening behaviour. Fig. 1a shows a schematic representation of the experimental procedure which is used to determine strain hardening.

The strain hardening behaviour of polymers is analysed by Rheotens apparatus 1 (product of Göttfert, Siemensstr.2, 74711 Buchen, Germany) in which a melt strand 2 is elongated by drawing down with a defined acceleration. The haul-off force F as a function of draw-down velocity (v) is recorded.

The test procedure is performed in a standard climatized room with controlled room temperature of T = 23 °C. The Rheotens apparatus 1 is combined with an extruder/melt pump 3 for continuous feeding of the melt strand 2. The extrusion temperature is 200°C; a capillary die with a diameter of 2 mm and a length of 6 mm is used and the acceleration of the melt strand 2 drawn down is 120 mm/sec².

The schematic diagram in Figure 1b shows in an exemplary fashion the measured increase in haul-off force F (i.e. "melt strength") vs. the increase in draw-down velocity (v) (i.e. "drawability").

Figure 2 shows the recorded curves of Rheotens measurements of polymer samples with and without strain hardening behaviour. The maximum points (Fmax; vmax) at failure of the strand are characteristic for the strength and the drawability of the melt.

The standard propylene polymers 4, 5, 6 with melt indices of 0.3, 2.0 and 3.0 g/10 min at 230°C/2.16 kg show a very low melt strength and low drawability. They have no strain hardening.

Long chain branched propylene polymer 7 (melt index of sample in diagram is 2 to 3 g/10 min at 230°C/2.16 kg) or LDPE 8 (melt index of sample in diagram is 0.7 g/10 min at 230°C/2.16 kg) show a completely different drawability vs. melt strength behaviour. With increasing the draw down velocity v the haul-off force F increases to a much higher level, compared to the standard propylene polymers 4, 5, 6. This curve shape is characteristic for strain hardening.

### Analytical Tests

Values quoted in the description/examples are measured according to the following tests:
Intrinsic viscosity: Intrinsic Viscosity was measured according to DIN ISO 1628-1 (October 1999) in Decalin at 135 °C
Melt flow rate (MFR), i.e. MFR₂, was measured according to ISO 1133 at 230°C and a load of 2.16 kg.
Comonomer content was determined in a known manner based on FTIR measurements calibrated with C¹³NMR.
Density is measured according to ISO 1183
Flexural Modulus was measured according to ISO 178
Tensile modulus, tensile strength at yield and elongation at yield were measured on specimen according to ISO 527-2.
Charpy, notched is measured according to ISO 179/1eA at 23°C using injection molded test specimen as described in EN ISO 1873-2 (80 x 10 x 4 mm)
SEC: The molecular weights and molecular weight distributions of polymers were determined with A Millipore Waters ALC/GPC operating at 135 °C and equipped with two mixed bed and one 107 Å TSK-Gel columns (TOSOHAAS 16S) and a differential refractometer detector. The solvent 1,2,4-trichlorobezene was applied at flow rate of 1 ml/min. The columns were calibrated with narrow molecular weight distribution polystyrene standards and narrow and broad polypropylenes.

### Polymer Materials used:

The following materials were used in the Examples:
**PP1:** A commercial unimodal random copolymer of propylene and ethylene having an ethylene content of 3.3 wt% and an MFR₂ of 20 g/10min.
**LCBPP**: The long chain branched polymer used was a commercial long chain branched random polypropylene copolymer with 3.5 wt% ethylene having MFR 2.5 g/10 min, Flex Modulus 850, tensile strength at yield 30 MPa, elongation at yield 13%, tensile modulus 900 MPa, charpy imapct strength, notched (23°C) 8.0 kJ/m2, Branching index g'=0.8.

### Example 1

### Processing Window

Polymer sample PP1 was used alone or with 5 wt% of the LCBPP added. The composition was injection moulded to give PPreX® pre-forms of thickness 2.8 mm and with neck dimension 38/10 mm and weight 14g.

Polypropylene bottles (300 ml) were stretch blow moulded on a one-cavity SIG Corpoplast LB01HR machine from 14 g pre-forms. This machine is equipped with two heater boxes, each having 5 IR lamps, but only one box was used in the determination of processing windows. The setting ratio of the lamps in the heater box was LI/L2/L3/L4/L5 46/57/85/85/54. All preforms were heated for the same period of time, only total heating was changed. Preforms were heated in two periods, HT1 and HT2. Between HT1 and HT2 is a conditioning time, CT1. After HT2 and before stretching is a conditioning time, CT2. HT1, HT2, CT1 and CT2 were 15 seconds, 4.6 seconds, 13 seconds and 10 seconds respectively. During heating of the preforms, surface cooling was provided to prevent surface melting. Cooling was carried out at 80% of the fan capacity. Additionally the preform was rotated on a mandrel throughout heating and conditioning at a speed of 100 rpm. After CT2, all bottles were blown under the same conditions. The preform was brought into the bottle mould and first stretched at a speed of 1000 mm/s. A pressure of 6 bar for 1.2 seconds was then used to blow up the bottle.

For each sample, the total heating energy was changed in steps and the resulting pre-form temperatures recorded to find the upper preform temperature value and lower preform temperature at which bottles without visible failures can be blown. This range is defined as the processing window of biaxial stretching of bottles.

Visible failures will be readily determined by those skilled in the art. For example, temperatures that are too low for stretching causes the stretch rod to puncture the preform. Temperatures that are too high for stretching cause the polymer to melt and leads to variations in the thickness of the blown articles.

| **Material** | **Upper temp. °C** | **Lower temp. °C** | **Window** |
|---|---|---|---|
| PP1 | 127 | 124 | 3 |
| PP1 + LCBPP | 127 | 120 | 7 |

Surprisingly it can be observed that it was possible to make bottles of preforms containing 5% by weight of LCBPP at a lower preform temperature. An expansion of the processing window at which it was possible to make acceptable bottles was therefore achieved.

## Claims

1. A process for the formation of an article comprising:
(I) mixing at least one polypropylene having long chain branching with a random propylene copolymer;
(II) extruding the resulting mixture and injecting the extrudate into a mould to form a preform:
(III) allowing the preform to cool;
(IV) reheating the preform to a temperature in the range 100 to 160°C; and
(V) stretching and blowing the preform to form an article.

2. A process for the formation of an article comprising:
(I) mixing at least one polypropylene having long chain branching with a random polypropylene copolymer;
(II) extruding the resulting mixture and injecting the extrudate into a mould to form a preform: and
(III) stretching and blowing the preform to form an article without allowing the preform to cool.

3. A ISBM article formed from at least one random propylene copolymer and a polypropylene having long chain branching.

4. An ISBM article as claimed in claim 3 wherein comprising
(I) 71 to 99.5 wt% of a random copolymer of polypropylene; and
(II) 0.5 to 14 wt% of a polypropylene having long chain branching.

5. An ISBM article as claimed in claim 4 wherein the polypropylene having long chain branching has a g' value of 0.2 to 0.4.

6. An ISBM article as claimed in claim 3 or 4 wherein both the random copolymer of polypropylene and the polypropylene having long chain branching are based on propylene ethylene copolymers.

7. An ISBM article claimed in claim 3 to 5 wherein the polypropylene having long chain branching is a random copolymer with one or more olefins and/or dienes selected from ethylene and C₄₋₁₈ alpha-olefins or dienes.

8. An ISBM article as claimed in claims 3 to 7 being a monolayered article with optional barrier layer.

## Patentansprüche

1. Verfahren zur Herstellung eines Gegenstandes, umfassend:
(I) Mischen von zumindest einem Polypropylen mit einer langkettigen Verzweigung mit einem statistischen Propylencopolymer;
(II) Extrudieren des entstandenen Gemischs und Einspritzen des Extrudats in eine Form, so daß ein Vorformling erzeugt wird;
(III) Abkühlenlassen des Vorformlings;
(IV) erneutes Erwärmen des Vorformlings auf eine Temperatur im Bereich von 100 bis 160°C; und
(V) Recken und Blasen des Vorformlings, so daß ein Gegenstand geformt wird.

2. Verfahren zur Herstellung eines Gegenstandes, umfassend:
(I) Mischen von zumindest einem Polypropylen mit einer langkettigen Verzweigung mit einem statistischen Propylencopolymer;
(II) Extrudieren des entstandenen Gemischs und Einspritzen des Extrudats in eine Form, so daß ein Vorformling erzeugt wird; und
(III) Recken und Blasen des Vorformlings, so daß ein Gegenstand geformt wird, ohne daß die Vorform abkühlen kann.

3. ISBM-Gegenstand, der aus zumindest einem statistischen Propylencopolymer und einem Polypropylen mit einer langkettigen Verzweigung hergestellt ist.

4. ISBM-Gegenstand nach Anspruch 3, umfassend:
(I) 71 bis 99,5 Gew.-% eines statistischen Copolymers von Polypropylen; und
(II) 0,5 bis 14 Gew.-% eines Polypropylens mit einer langkettigen Verzweigung.

5. ISBM-Gegenstand nach Anspruch 4, wobei das Polypropylen mit einer langkettigen Verzweigung einen g'-Wert von 0,2 bis 0,4 hat.

6. ISBM-Gegenstand nach Anspruch 3 oder 4, wobei sowohl das statistische Copolymer von Polypropylen als auch das Polypropylen mit einer langkettigen Verzweigung auf Propylen-Ethylen-Copolymeren basieren.

7. ISBM-Gegenstand nach Anspruch 3 bis 5, wobei das Polypropylen mit einer langkettigen Verzweigung ein statistischen Copolymer mit einem oder mehreren Olefinen und/oder Dienen ist, die aus Ethylen und C₄₋₁₈-α-Olefinen oder Dienen ausgewählt sind.

8. ISBM-Gegenstand nach den Ansprüchen 3 bis 7, der ein einschichtiger Gegenstand mit gegebenenfalls einer Sperrschicht ist.

## Revendications

1. Procédé de formation d'un article comprenant :
(I) le mélange d'au moins un polypropylène ayant une longue chaîne ramifiée avec un copolymère de propylène aléatoire ;
(II) l'extrusion du mélange résultant et l'injection de l'extrudat dans un moule pour former une préforme ;
(III) le refroidissement de la préforme ;
(IV) le réchauffage de la préforme à une température comprise dans la plage allant de 100 à 160 °C ; et
(V) l'étirement et le soufflage de la préforme pour former un article.

2. Procédé de formation d'un article comprenant :
(I) le mélange d'au moins un polypropylène ayant une longue chaîne ramifiée avec un copolymère de polypropylène aléatoire ;
(II) l'extrusion du mélange résultant et l'injection de l'extrudat dans un moule pour former une préforme ; et
(III) l'étirement et le soufflage de la préforme pour former un article sans faire refroidir la préforme.

3. Article moulé par injection-étirement-soufflage (ISBM) formé à partir d'au moins un copolymère de propylène aléatoire et un polypropylène ayant une longue chaîne ramifiée.

4. Article ISBM selon la revendication 3, comprenant
(I) de 71 à 99,5 % en poids d'un copolymère de polypropylène aléatoire ; et
(II) de 0,5 à 14 % en poids d'un polypropylène ayant une longue chaîne ramifiée.

5. Article ISBM selon la revendication 4, dans lequel le polypropylène ayant une longue chaîne ramifiée a une valeur g' de 0,2 à 0,4.

6. Article ISBM selon la revendication 3 ou 4, dans lequel le copolymère de polypropylène aléatoire et le polypropylène ayant une longue chaîne ramifiée sont tous deux basés sur des copolymères de propylène-éthylène.

7. Article ISBM selon l'une quelconque des revendications 3 à 5, dans lequel le polypropylène ayant une longue chaîne ramifiée est un copolymère aléatoire avec un(e) ou plusieurs oléfines et/ou diènes choisis parmi l'éthylène et les alpha-oléfines ou diènes en C₄-C₁₈.

8. Article ISBM selon l'une quelconque des revendications 3 à 7 qui est un article monocouche comprenant une couche barrière facultative.
